# EUROPÄISCHE PATENTANMELDUNG

(11) **EP 1 661 825 A2**
(43) Veröffentlichungstag der Anmeldung: **31.05.2006**
(21) Anmeldenummer: 05024177.7
(22) Anmeldetag: 06.11.2005
(51) Int. Cl.: B65D 90/22, F16K 31/32

(54) **Sicherungssystem für geschlossene Lagerbehälter insbesondere für wassergefährdende Stoffe und Verfahren zur Sicherung von Lagerbehältern gegen Hochwasser**

(30) Priorität: 06.11.2004 DE 102004053699
(71) Anmelder: Hille, Frank, 02727 Neugersdorf (DE); Hille, Bernd, 02727 Neugersdorf (DE)
(72) Erfinder: Hille, Frank, 02727 Neugersdorf (DE); Hille, Bernd, 02727 Neugersdorf (DE)
(74) Vertreter: Weissfloh, Ingo

(57) **Zusammenfassung**

Der Erfindung liegt die Aufgabe zugrunde, ein Sicherungssystem und ein Verfahren zu schaffen, dass sicher das ungewollte Eindringen und/oder Ausströmen von Stoffen in oder aus Lagerbehältern infolge von erhöhtem Wasserstand verhindert. Das Sicherungssystem für geschlossene Lagerbehälter 2, insbesondere für wassergefährdende Stoffe, zeichnet sich dadurch aus, dass ein Sensor 4 einen erhöhten Wasserstand im Aufstellraum registriert und infolge dessen in den Anschlussleitungen 1 des Lagerbehälters angeordnete Stellventile 3 sicher schließt. Der Sensor 4 kann als Schwimmer 4 ausgeführt den Auftrieb bei Ansteigen des Wasserspiegels nutzen und über mechanische Verbindungen das Ventil 3 bzw. Hahn 3 schließen oder als elektrischer Sensor 4 mittelbar ein elektrisches Stellventil 3 ansteuern. Durch zusätzliche Anordnung eines Befüllventils am Lagerbehälter wird das kontrollierte Einlaufen von Wasser in den Lagerbehälter ermöglicht und damit das Aufschwimmen des Lagerbehälters verhindert.

Einsatzgebiet der Erfindung ist die Sicherheitstechnik für den Tank- und Anlagenbau für wassergefährdende Stoffe.

## Beschreibung

Sicherheitssystem für geschlossene Lagerbehälter insbesondere für wassergefährdende Stoffe, wie z. B. Heizöltanks und Verfahren zur Sicherung von Lagerbehältern gegen Hochwasser.

Vorrichtungen zur Sicherung von Behältern mit wassergefährdenden Stoffen, insbesondere Öltanks sind in verschiedenen Ausführungen bekannt. Gegen Leckagen werden verschiedene Auffangwannen vorgesehen. Zum Schutz vor Hochwasser werden Öltanks beispielsweise mit Gurten oder Gewichten gegen Auftrieb und damit das Bersten der Leitungen geschützt. Die Leitungen sind bis auf die Entlüftungsleitung in der Regel Teil geschlossener Systeme und somit, solange die Leitungen nicht bersten, sicher gegen ungewolltes Ausströmen oder Eindringen von Stoffen. Alle Sicherungsvorrichtungen sind für den Fall nicht wirksam, dass sich der Behälter aus der Verankerung löst und die Leitungen bersten. Außerdem ist die Entlüftungsleitung, die nicht absperrbar ausgeführt sein darf, ungeschützt. In der DE 102 44 380 wird als weitere Möglichkeit des Schutzes und als Sicherungssystem die Verwendung von sogenannten Quellvorhängen, bestehend aus einem Trägermaterial und darauf aufgebrachten Quellmaterial bzw. wasseraufnehmenden Materialen vorgeschlagen. Diese Materialien werden insbesondere unter den Tankanlagen angebracht und sollen die Druckbelastungen bei Wesserflutung auf die Tanks zumindest mindern.

Der Erfindung liegt die Aufgabe zugrunde, ein Sicherungssystem und ein Verfahren zu schaffen, dass sicher das ungewollte Eindringen und Ausströmen von Stoffen in oder aus Behältern infolge von erhöhtem Wasserstand verhindert. Die Funktion soll sowohl im Falle des Berstens von Anschlussleitungen als auch bei offenen Entlüftungsleitungen gewährleistet sein. Zugleich soll es möglich sein, dass durch kontrollierten Zufluss einer Flüssigkeit, vorzugsweise Wasser, in den Behälter das Aufschwimmen desselben verhindert wird.

Das Sicherungssystem für geschlossene Lagerbehälter insbesondere für wassergefährdende Stoffe zeichnet sich dadurch aus, dass ein Sensor einen erhöhten Wasserstand im Aufstellraum registriert und infolge dessen in den Anschlussleitungen des Lagerbehälters angeordnete Stellventile sicher schließt. Der Sensor kann als Schwimmer ausgeführt den Auftrieb bei Ansteigen des Wasserspiegels nutzen und über mechanische Verbindungen das Ventil bzw. den Hahn schließen oder als elektrischer Sensor mittelbar ein elektrisches Stellventil oder über ein elektrisches Steuergerät ansteuern. Dadurch kann sichergestellt werden, dass es bei Hochwasser, Rohrbruch etc. der im Aufstellraum bzw. außerhalb ansteigende Wasserpegel nicht zum unerwünschten Eindringen bzw. Ausströmen in bzw. aus dem Lagerbehälter führen kann. Somit kann eine Gefährdung der Umwelt durch z.B. Öl oder andere gefährliche Stoffe sicher verhindert werden. Andererseits ist eine Verunreinigung des Lagerbehälterinhalts durch eindringende Flüssigkeiten ausgeschlossen. Auch bei einem Bersten der Anschlussleitungen ist das System sicher.

Vorteilhafte Ausführungsbeispiele des Sicherungssystems für geschlossene Lagerbehälter insbesondere für wassergefährdende Stoffe ergeben sich aus den Unteransprüchen 2 bis 14.

Die Weiterbildung nach Anspruch 2 ermöglicht durch Ausführung als Schwimmersensor die Unabhängigkeit von einem Stromanschluss. Damit ist eine Funktionssicherheit auch ohne Netzanschluss bzw. bei Ausfall des elektrischen Netzes gegeben. Durch den Schutz des Schwimmersensors ist die Funktionssicherheit auch bei Verunreinigung bzw. starker Strömung gegeben.

Bei der Weiterbildung nach Anspruch 3 bewirkt das Gegengewicht zum Schwimmer bzw. mittels einer Feder bei Funktionsauslösung eine ausreichende Kraftausübung auf das Ventil. Damit kann auf eine Gestängeverbindung, die den Auftrieb direkt auf das Ventil überträgt, verzichtet werden. Daher kann beispielsweise ein Seil Schwimmer und

Gestänge verbinden.

Die Weiterbildung nach Anspruch 4 bietet die Möglichkeit, das Sicherungssystem mit elektronischem Sensor und elektrisch betriebenem Ventil/Hahn auszuführen.

Bei der Weiterbildung nach Anspruch 5 schließt das Ventil stromlos und stellt so die Funktion auch bei Stromausfall sicher.

Nach Anspruch 6 kann bei einmal ausgelöster Schließung des Ventils dasselbe mittels eines Bolzens verriegelt werden und somit geschlossen halten. Damit ist sichergestellt, dass auch bei möglicher späterer Bewegung des Behälters aus der ursprünglichen Position die Ventile geschlossen bleiben.

Bei der Weiterbildung nach Anspruch 7 sind in den Anschlussleitungen Sollbruchstellen bzw. flexible Leitungen vorgesehen, die sicherstellen, dass bei Bewegung des Lagerbehälters aus der ursprünglichen Position die Ventile mit dem Lagerbehälter verbunden bleiben und dieser somit verschlossen bleibt.

Die Weiterbildung nach Anspruch 8 verhindert das Aufschwimmen des Behälters für den Fall, dass der Behälter nicht vollständig gefüllt ist, durch ein kontrolliertes Einlaufen von Wasser in den Lagerbehälter über das Befüllventil. Dadurch wird der Auftrieb verringert und es wird verhindert, dass der Behälter sich aus der Verankerung löst. Bei sinkendem Wasserstand im Aufstellraum verhindert das Schließen des Ventils, dass Flüssigkeiten aus dem Behälter wieder ausströmen. Das automatische Entlüftungsventil ermöglicht den Abbau eines Überdrucks im Lagerbehälter, indem die Luft aus dem Lagerbehälter entweichen kann.

Durch Weiterbildung nach Anspruch 9 ist das Ventil im unteren Bereich des Behälters angeordnet. Dadurch kann das Wasser einströmen, wenn sich der Pegel im Aufstellraum oberhalb der tiefsten Stelle des Lagerbehälters befindet. Somit kann auch das Aufschwimmen eines leeren bzw. fast leeren Behälters verhindert werden.

Bei der Weiterbildung nach Anspruch 10 ist als Befüllventil ein Rückschlagventil, bzw. eine Rückschlagklappe vorgesehen, die bei geringer Druckdifferenz öffnet. Dieses Rückschlagventil ermöglicht die Strömung nur in eine Richtung - in den Lagerbehälter hinein.

Ein geringer notweniger Differenzdruck zwischen dem Druck im Behälter und im Aufstellraum ermöglicht das Öffnen des Rückschlagventils bei geringfügig höherem Wasserstand im Aufstellraum, bezogen auf den Flüssigkeitsstand im Behälter.

Die Weiterbildung nach Anspruch 11 sieht die Registrierung des Wasserstandes durch einen Sensor vor, der das Befüllventil direkt oder über ein Steuergerät betätigt. Damit werden wie auch im Anspruch 12 elektronischelektrische Lösungen eingeschlossen.

Gemäß der Weiterbildung nach Anspruch 13 ist das Füllen des Lagerbehälters im Bedarfsfall durch Öffnen des Befüllventils, das in einer mit einer Wasserleitung verbundenen Leitung angeordnet ist, möglich. Das Schließen des Ventils erfolgt durch Registrierung der Befüllung des Lagerbehälters durch einen Füllstandssensor. Durch diese Weiterbildung wird vor allem verhindert, dass durch verschmutztes Wasser das vollständige Schließen des Befüllventils beeinträchtigt wird. Somit wird das Auslaufen des Lagerbehälters bei sinkendem Wasserstand im Aufstellraum sicherer verhindert.

Die Weiterbildung nach Anspruch 14 sieht die Anordnung einer Befüllpumpe mit Saugleitung am Lagerbehälter vor. Dadurch kann der Lagerbehälter bei Auftreten eines durch den Sensor registrierten unzulässigen Wasserstandes befüllt und somit dem Aufschwimmen des Lagerbehälters entgegengewirkt werden. Die Endabschaltung der Befüllpumpe erfolgt durch den Füllstandssensor.

Bei der Weiterbildung nach Anspruch 15 sind die Sensoren zur Erfassung der Wasserstandshöhe und der Füllstandshöhe im Lagerbehälter Drucksensoren. Mittels dieser Sensoren lässt sich eine Druckdifferenz zwischen Lagerbehälterinnenraum und Umgebung außerhalb des Lagerbehälters ermitteln und somit die weiteren Schritte der Befüllung des Lagerbehälters mit z. B. Wasser einleiten, sofern eine entsprechende Druckdifferenz festgestellt wurde. Hierdurch wird der Auftrieb eines leeren oder nicht vollen Lagerbehälters beseitigt.

Die Erfindung wird nachfolgend anhand der Zeichnung näher erläutert.

Es zeigen:

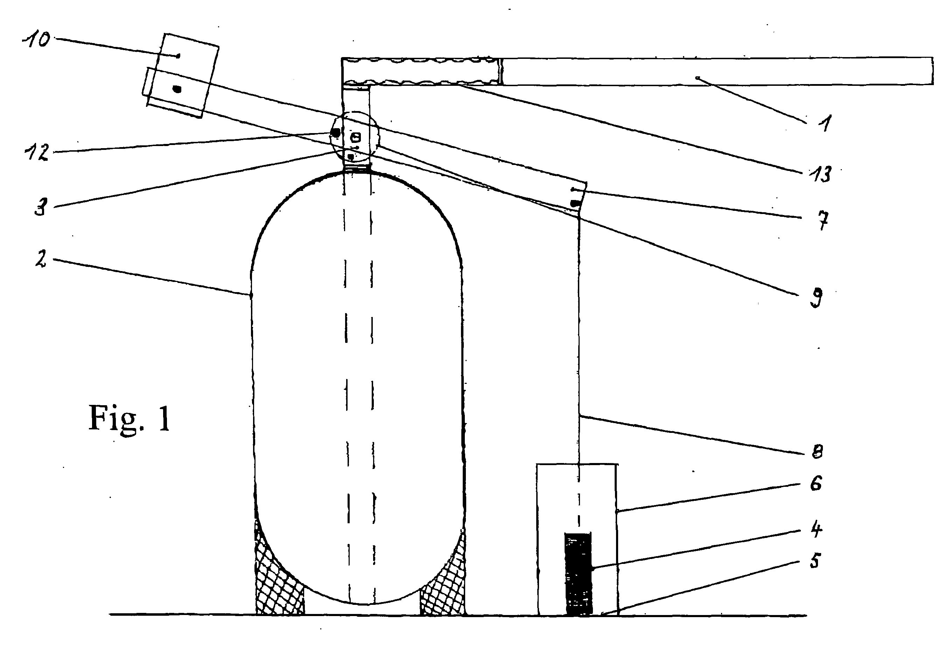

Fig. 1 das Sicherungssystem für Lagerbehälter mit Schwimmer,

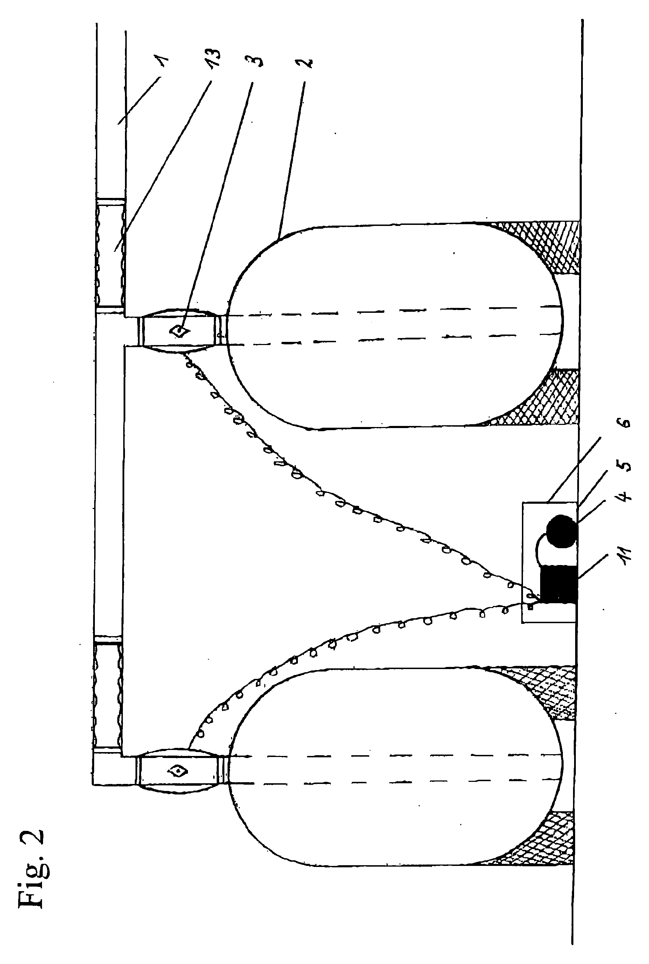

Fig. 2 das Sicherungssystem für Lagerbehälter mit elektrischem Sensor,

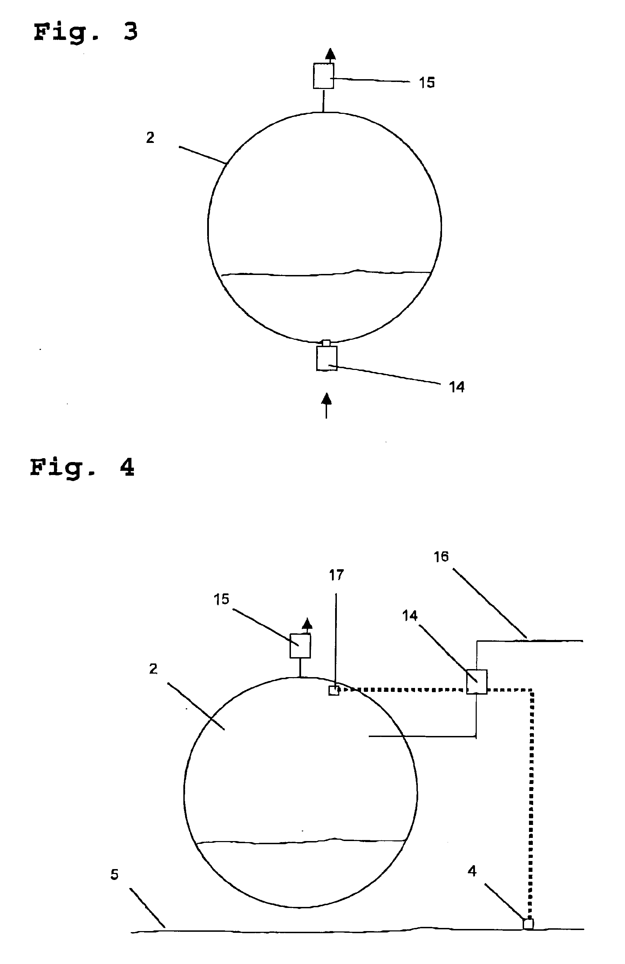

Fig. 3 die Prinzipdarstellung einer kontrollierten Befüllvorrichtung des Lagerbehälters mit einem Befüll- und einem Entlüftungsventil,
Fig. 4 die Prinzipdarstellung einer kontrollierten Befüllvorrichtung durch Verbindung mit einer Wasserleitung und

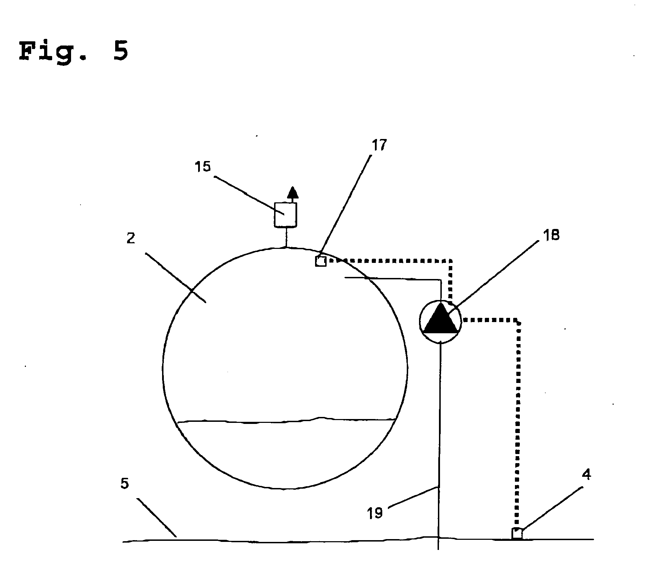

Fig. 5 die Prinzipdarstellung einer Befüllvorrichtung mit Befüllpumpe.

Das Sicherungssystem ist wie folgt aufgebaut. In die Anschlussleitungen 1 des oder der Lagerbehälter 2 ist jeweils ein Hahn 3 oder ein Ventil 3 eingebaut. In der Ausgangsposition ist der Hahn 3 geöffnet. Durch Verdrehen des Kükens kann der Hahn 3 geschlossen werden. Am Küken ist ein Gestänge 7 befestigt. Auf der einen Seite des Gestänges 7 ist ein Stahlseil 8 befestigt. Das Stahlseil 8 ist nach unten geführt und dort mit einem Schwimmer 4 verbunden. Auf der anderen Seite ist ein verschiebbar angeordnetes Gegengewicht 10 befestigt. Das Gegengewicht 10 wird auf dem Gestänge 7 so positioniert, dass die Kraft des Gegengewichts 10 auf das Küken kleiner als die Gewichtskraft des Schwimmers 4, aber zugleich größer als die um den Auftrieb verminderte Gewichtskraft des Schwimmers 4 ist. Damit wird bei auftretendem Wasser durch die Gewichtskraft des Gegengewichtes 10 der Hahn 3 geschlossen. Bei erfolgtem Schließvorgang kommen zwei auf einer Scheibe 9 und am Hahn 3 befindliche Löcher zur Deckung, so dass ein Bolzen 12, durch eine Feder bewegt, sich durch beide Löcher bewegt und damit die Stellung des Hahnes 3 fixiert und somit ein Wiederöffncn verhindert. Nur durch manuelle Entfernung des Bolzens 12 kann der Hahn 3 wieder geöffnet werden.

Der Schwimmer 4 ist durch eine am Boden des Aufstellraumes befestigte Schutzkammer 6 vor starker Strömung, Verklemmen und Eindringen von Fremdkörpern des Flüssigkeitspegels 5, die die Funktion beeinträchtigen könnten, geschützt. Gleichzeitig übernimmt die Schutzkammer 6 die Bewegungsführung des Schwimmers 4. Die Schutzkammer 6 ist so ausgeführt, dass ein zylindrischer Behälter vertikale Schlitze enthält, die das Einströmen von Flüssigkeiten zulassen.

Die Anschlussleitungen 1 sind mit Sollbruchstellen 13 versehen, die bei Wegspülen des Lagerbehälters 2 bersten und damit sicherstellen, dass das Ventil 3 bzw. der Hahn 3 mit dem Lagerbehälter 2 verbunden bleibt.

Eine Variante dieser Anordnung ist mit einem Ventil 3 ausführbar. Dazu wird anstelle des Hahns 3 ein Ventil 3 in die Anschlussleitungen 1 installiert. Das Ventil 3 weist einen mit dem Gehäuse verbundenen Drehpunkt auf, an dem ein Gestänge 7 befestigt ist, das wiederum auf den Ventilkegel wirkt. Die Verriegelung erfolgt entsprechend.

In einer anderen Variante kann der Schwimmer 4 mit einer Schubstange 8 verbunden sein, die das Gestänge 7 hebt und damit den Hahn 3 bzw. Ventil 3 schließt. In diesem Fall kann das Gegengewicht 10 entfallen, wenn die Dichte des Schwimmers 4 geringer als die der Flüssigkeit ist.

Eine andere Realisierung des Sicherungssystems basiert auf einem elektrischen Sensor 3, der die Feuchtigkeit erkennt und über ein elektrisches Steuergerät 11 ein Ventil 3 mit elektrischem Antrieb, z. B. ein Magnetventil, schließt.

Das System kann dadurch ergänzt werden, dass das Aufschwimmen des Lagerbehälters 2 durch Befüllen mit Wasser verhindert wird. Dazu wird im unteren Bereich des Lagerbehälters 2 ein Befüllventil 14, vorzugsweise als eine auf eine geringe Druckdifferenz reagierende Rückschlagklappe 14, angeordnet. Eine hydrostatische Druckdifferenz resultiert aus dem unterschiedlichen Pegelstand und dem Dichteunterschied zwischen dem Inhalt des Lagerbehälters 2 und dem Wasserstand im Aufstellraum, Bei höherem hydrostatischen Druck außerhalb des Lagerbehälters 2 öffnet das Befüllventil 14 und gibt den Einlauf von Wasser in den Lagerbehälter 2 frei. Damit nähert sich der Pegelstand im Lagerbehälter 2 dem außerhalb des Lagerbehälters 2 an. Bei geringerem hydrostatischen Druck außerhalb des Lagerbehälters 2 schließt das Befüllventil 14 bzw. bleibt geschlossen.

Anstelle des Zulaufs aus der Umgebung kann durch Verbindung mit einer Wasserleitung 16 der Zulauf aus der Wasserleitung erfolgen. Dazu ist eine entsprechende Anordnung von Sensoren und eines Steuerungsgerätes zur Ansteuerung für die Öffnung bzw. das Schließen des Befüllventils 14 vorgesehen.

Alle Ventile können natürlich auch elektrisch betrieben werden und sind hier vorzugsweise mit einer Stellvorrichtung verbunden.

Das Verfahren zur Vermeidung des Herausreißens von nicht vollständig gefüllten Lagerbehältern 2 aus deren Verankerungen bei Hochwasser ist durch die Ermittlung der unterschiedlichen Flüssigkeitsstände innerhalb und außerhalb der Lagerbehälter 2 bzw. durch die Ermittlung einer Druckdifferenz gekennzeichnet. Durch einen oder mehrere in Abständen übereinander angeordneten Sensoren 4, die den Hochwasserstand ermitteln und durch Füllstandssensoren 17, die den Flüssigkeitsstand innerhalb der Lagerbehälter 2 ermitteln, wird durch eine Regel-/Steuerschaltung ein Iststandsvergleich der unterschiedlichen Flüssigkeitsstände vorgenommen und bei einer vorgegebenen Überschreitung des Hochwasserstandes über den Flüssigkeitsstand innerhalb des Lagerbehälters 2 wird ein Befüllventil 14 geöffnet und somit der Lagerbehälter (2) mit Flüssigkeit gefüllt, bis zumindest der Flüssigkeitsstand innerhalb des Lagerbehälters 2 den gleichen Stand wie das Hochwasser erreicht hat. Anschließend wird das Befüllventil 14 wieder geschlossen. Die Sensoren 4 und 17 können in diesem Fall auch Drucksensoren sein.

### Zusammenstellung der Bezugszeichen

- 1 -: Anschlussleitungen
- 2 -: Lagerbehälter
- 3 -: Ventil, Hahn
- 4 -: Sensor, Schwimmer
- 5 -: Flüssigkeitspegel
- 6 -: Schutzkammer
- 7 -: Gestänge
- 8 -: Seil, Schubstange
- 9 -: Scheibe
- 10 -: Gegengewicht
- 11 -: Steuergerät
- 12 -: federbelasteter Bolzen
- 13 -: Sollbruchstelle, flexible Leitungen
- 14 -: Befüllventil, Rückschlagventil, -klappe
- 15 -: Entlüftungsventil
- 16 -: Wasserleitung
- 17 -: Füllstandssensor
- 18 -: Befüllpumpe
- 19 -: Saugleitung

## Patentansprüche

1. Sicherungssystem gegen Hochwasser für geschlossene Lagerbehälter insbesondere für wassergefährdende Stoffe,
**dadurch gekennzeichnet,**
**dass** in die Anschlussleitungen (1) eines Lagerbehälters (2) jeweils ein Ventil (3) oder Hahn (3) installiert ist, der mit einem Sensor (4) zur Erfassung eines nicht regulären Flüssigkeitspegels (5) gekoppelt ist und so konstruiert ist, dass im Falle eines Anstiegs des Flüssigkeitspegels (5) die Ventile bzw. Hähne (3) automatisch verschlossen sind.

2. Sicherungssystem für geschlossene Lagerbehälter nach Anspruch 1,
**dadurch gekennzeichnet,**
**dass** der Sensor (4) als ein in einer flüssigkeitsdurchlässigen am Boden befestigten Schutzkammer (6) befindlicher Schwimmer (4) ausgeführt ist, der mit einem Gestänge (7) durch Seil (8) oder Schubstange (8) derart verbunden ist, dass das Eigengewicht das Ventil (3) oder den Hahn (3) geöffnet hält und bei Auftreten von Flüssigkeiten durch den damit verbundenen der Gewichtskraft entgegenwirkenden Auftrieb das Ventil (3) oder Hahn (3) in eine Schließstellung verstellbar ist.

3. Sicherungssystem für geschlossene Lagerbehälter nach einem der vorhergehenden Ansprüche,
**dadurch gekennzeichnet,**
**dass** das Ventil (3) oder der Hahn (3) über das Gestänge (7) mit einem Gegengewicht (10), das größer als das durch Auftrieb verminderte Schwimmergewicht ist oder mit einer Feder belastet ist und das Ventil (3) oder der Hahn (3) somit in die Schließstellung stellbar ist.

4. Sicherungssystem für geschlossene Lagerbehälter nach Anspruch 1,
**dadurch gekennzeichnet,**
**dass** ein am Boden angeordneter Flüssigkeitssensor (4) über ein Steuergerät (11) das Ventil (3) oder den Hahn (3) elektrisch ansteuerbar ist.

5. Sicherungssystem für geschlossene Lagerbehälter nach Anspruch 1 und 4,
**dadurch gekennzeichnet,**
**dass** das Ventil (3) oder der Hahn (3) stromlos schließbar ist.

6. Sicherungssystem für geschlossene Lagerbehälter nach einem der vorhergehenden Ansprüche,
**dadurch gekennzeichnet,**
**dass** das jeweilige Ventil (3) oder der Hahn (3) durch einen federbelasteten Bolzen (12) nach dem schließvorgang verriegelbar ist.

7. Sicherungssystem für geschlossene Lagerbehälter nach einem der vorhergehenden Ansprüche,
**dadurch gekennzeichnet,**
**dass** in den Anschlussleitungen (1) vom Lagerbehälter (2) aus nach den Ventilen (3) Sollbruchstellen (13) oder flexible Leitungen (13) angeordnet sind, die beim gewaltsamen Herausreißen des Lagerbehälters (2) aus den Verankerungen sichern, dass die Ventile (3) mit dem Lagerbehälter (2) verbunden bleiben.

8. Sicherungssystem für geschlossene Lagerbehälter nach Anspruch 1 bis 6,
**dadurch gekennzeichnet ,**
**dass** am Lagerbehälter (2) ein Befüllventil (14) angebracht ist, welches bei steigendem Wasserstand im Aufstellraum sich öffnet und zugleich eine Strömung aus dem Lagerbehälter (2) nicht zulässt, und an der höchsten Stelle des Lagerbehälters (2) ein automatisches Entlüftungsventil (15) angebracht ist.

9. Sicherungssystem für geschlossene Lagerbehälter nach Anspruch B,
**dadurch gekennzeichnet,**
**dass** das Befüllventil (14) unterhalb oder im unteren Teil des Lagerbehälters (2) angeordnet ist.

10. Sicherungssystem für geschlossene Lagerbehälter nach Anspruch 8 und 9,
**dadurch gekennzeichnet,**
**dass** das Befüllventil (14) ein Rückschlagventil oder eine Rückschlagklappe ist, die bei einer geringen Druckdifferenz öffnet.

11. Sicherungssystem für geschlossene Lagerbehälter nach Anspruch 8 und 9,
**dadurch gekennzeichnet,**
**dass** das Befüllventil (14) durch den Flüssigkeitssensor (4) über eine Stellvorrichtung steuerbar ist.

12. Sicherungssystem für geschlossene Lagerbehälter nach Anspruch 8, 9 und 11,
**dadurch gekennzeichnet,**
**dass** das Befüllventil (14) und das Entlüftungsventil 15) elektrisch direkt oder über die Stellvorrichtung gekoppelt sind.

13. Sicherungssystem für geschlossene Lagerbehälter nach Anspruch 8, 9, 11 und 12,
**dadurch gekennzeichnet,**
**dass** der Lagerbehälter (2) mit einer Wasserleitung (16) verbunden ist und das darin angeordnete Bafüllventil (14) durch den Flüssigkeitssensor (4) ansteuerbar ist und durch einen im oberen Bereich des Lagerbehälters (2) angeordneten Füllstandssensor (17) abschaltbar ist.

14. Sicherungssystem für geschlossene Lagerbehälter nach Anspruch 8, 9 und 11 bis 13,
**dadurch gekennzeichnet,**
**dass** zusätzlich oder anstelle des Befüllventils (14) eine Befüllpumpe (18) einschließlich Saugleitung (19) mit dem Lagerbehälter (2) verbunden ist, wobei die Befüllpumpe (18) durch den entsprechend angeordneten Flüssigkeitssensor (4) und den Füllstandssensor (17) steuerbar ist.

15. Sicherungssystem für geschlossene Lagerbehälter nach Anspruch 8, 9 und 11 bis 14,
**dadurch gekennzeichnet,**
**dass** die Sensoren (4) und (17) Drucksensoren sind.

16. Verfahren zur Sicherung von Lagerbehältern bei Hochwasser gegen das Herausreißen der Lagerbehälter aus deren Verankerungen,
**dadurch gekennzeichnet,**
**dass** durch Sensoren (4) der Hochwasserstand und durch Füllstaridssensoren (17) der Flüssigkeitsstand innerhalb der Lagerbehälter (2) ermittelt wird und in einer Regel-/Steuerschaltung ein Iststandsvergleich erfolgt und bei einer vorgegebenen Überschreitung des Hochwasserstandes über den Flüssigkeitsstand innerhalb des Lagerbehälters (2) ein Befüllventile (14) geöffnet wird und somit der Lagerbehälter (2) mit Flüssigkeit gefüllt wird, bis zumindest der Flüssigkeitsstand innerhalb des Lagerbehälters (2) den gleichen Stand wie das Hochwasser erreicht hat und anschließend das Befüllventil (14) wieder geschlossen wird.
